# EUROPEAN PATENT APPLICATION

(11) **EP 4 465 467 A2**
(43) Date of publication of application: **20.11.2024**
(21) Application number: 24176519.7
(22) Date of filing: 17.05.2024
(51) Int. Cl.: H02J 1/08, H02J 5/00, H02J 7/00

(54) **USB POWER DELIVERY DISTRIBUTION ARCHITECTURE**

(30) Priority: 17.05.2023 BE 202305412
(71) Applicant: Niko NV, 9100 Sint-Niklaas (BE)
(72) Inventor: DE BRABANDER, Peter, 9100 Nieuwkerken-Waas (BE)
(74) Representative: Winger

(57) **Abstract**

A USB power delivery distribution architecture (100) comprises a power supply (3) configured for providing a low voltage output signal, and a plurality of USB power delivery devices (4), each receiving the low voltage output signal of the power supply (3) as an input and providing an output power signal. Each of the USB power delivery devices (4) is configured to autonomously regulate its output voltage to a value of less than 60VDC. The USB power delivery devices (4) comprise means for communicating which each other to coordinate power delivery without a central master controller, and each USB power delivery device (4) is provided with means for autonomously managing connection orientation to address polarization.

## Description

### Field of the invention

The present invention relates to electrical power distribution systems, specifically to a USB power delivery distribution architecture, for instance a USB-C power delivery distribution architecture.

### Background of the invention

In the realm of electronic devices, USB-C has emerged as a prevalent interface due to its versatility and capability to transmit both data and power between devices. This universal adoption has led to increased reliance on USB in general, and USB-C in particular, for a wide range of applications, from charging smartphones and laptops to powering desktop peripherals and other consumer electronics. As the number of devices utilizing USB increases, the demand for efficient and effective power delivery systems that can manage multiple devices, including e.g. USB-C devices, simultaneously has become more pronounced.

One of the primary challenges in the current landscape is the management of power distribution among multiple devices connected through USB interfaces. Traditional power delivery systems often rely on centralized control mechanisms to manage the distribution of power, which can lead to inefficiencies and potential bottlenecks as the number of connected devices grows. Additionally, these systems typically require manual configuration and monitoring to ensure optimal performance, which can be cumbersome and time-consuming for users.

Moreover, the issue of device compatibility and power handling capabilities further complicates the power management process. Devices vary widely in their power requirements and charging protocols, which can lead to compatibility issues and underutilization of available power resources. This disparity necessitates a more adaptable and dynamic approach to power distribution that can cater to the diverse needs of different devices without requiring constant user intervention.

Another significant concern is the physical integration of power delivery systems within environments like offices, homes, or public spaces. Many existing systems are not designed with aesthetics or space efficiency in mind, leading to cluttered and unorganized setups that can detract from the usability and overall user experience. More and more new electric or electronic devices have USB cables for being powered or charged. Existing power delivery architectures in existing homes are not yet adapted to this changing trend.

Existing power delivery architectures in existing homes comprise circuits of between 1 to 8, most often flush-mounted, sockets for receiving plugs from electric or electronic devices to be powered or charged. Often, users replace one or two of the sockets by a USB socket, for instance a USB-C socket, to be able to provide their new electric or electronic devices with power through the USB cable. However, in such architectures the power delivery the USB socket can deliver is low, with currently a maximum of not more than 70 Watt.

Despite the advancements in USB technology and its widespread adoption, there remains a clear need for further innovation in power delivery systems. These systems must not only address the challenges of efficiency, compatibility, and user-friendliness but also adapt to the evolving landscape of electronic devices and their growing power demands.

### Summary of the invention

It is an object of embodiments of the present invention to facilitate autonomous coordination and voltage regulation among multiple USB power delivery devices. This objective is accomplished by a USB power delivery distribution architecture according to embodiments of the present invention.

In a first aspect, the present invention relates to a USB power delivery distribution architecture, for instance, but not limited thereto, a USB-C power delivery distribution architecture, comprising:
- a power supply configured for providing a low voltage output signal,
- a plurality of USB power delivery devices, each receiving the low voltage output signal of the power supply as an input and providing an output power signal,
   wherein
- each of the USB power delivery devices is configured to autonomously regulate its output voltage to a value of less than 60VDC,
- the USB power delivery devices are capable of communicating which each other to coordinate power delivery without a central master controller, and
- each USB power delivery device is provided with means for autonomously managing connection orientation to address polarization.

In embodiments, the USB power delivery devices may be configured to handle varying power capacities, facilitating the inclusion of devices with different power ratings. This allows for flexibility in system design and cost savings.

In embodiments, a USB power delivery device may comprise:
- an input module for receiving the low voltage output signal from the power supply,
- a microcontroller for controlling functions of the USB power delivery device,
- a communication module for facilitating negotiating between the USB power delivery devices part of the USB power delivery distribution architecture,
- a power delivery management module for dynamically allocating power output of the USB power delivery device based at least on power requirements of a USB load when connected; and
- an output module for outputting power to the USB load when connected.

This modular design enables efficient power management and communication.

In embodiments, a USB power delivery device may further comprise a user interface for receiving preference settings from a user. This allows for customization based on user needs.

In embodiments, the dynamic allocation of power may be based on a priority system determined by user settings. This ensures critical devices receive power first.

In embodiments, the power delivery management module may be configured for, when the USB power delivery distribution architecture is in use, setting up a communication protocol for controlling the plurality of USB power delivery devices in accordance with the preference settings of the user by dividing power from the power supply over the plurality of USB power delivery devices. This enables intelligent power sharing based on user preferences.

In embodiments, the communication module may be configured for communicating the communication protocol to the plurality of USB power delivery devices. This ensures all devices operate based on the established protocol.

In embodiments, the power delivery management module may comprise means for receiving and managing the input from the user interface and control the USB power delivery devices accordingly. This provides a mechanism to implement user settings.

In embodiments, the user interface may comprise a selection menu for setting one or more of the following:
- priority order of one or more of the connected USB loads,
- target time for indicating when one or more USB loads need to be fully charged,
- allocation of a dedicated USB power delivery device to a particular USB load to make sure that this USB load is powered at all times,
- maximum available power from the power supply, and
- maximum allowable power for a particular connected USB load.

This provides a comprehensive set of user customization options.

In embodiments, the microcontroller and/or the power delivery management module may comprise means for instantly managing power supply that becomes available to optimize power supply to a connected USB load. This allows for dynamic reallocation of freed up power.

In embodiments, the communication module may comprise:
- means for communicating with the other USB power delivery devices in the architecture, and/or
- means for communication with an app on a mobile device.

This enables both local and remote communication capabilities. The communication module may use a wired or wireless communication protocol.

In embodiments, the USB power delivery distribution architecture may further comprise a protective device, for instance a fuse, between an AC or DC electrical network and the power supply. This provides overcurrent protection.

In embodiments, the power supply may be adapted for bringing an input of between 90 VAC and 264 VAC or an equivalent DC voltage of between 90 VDC and 400 VDC to an output of lower than 60 VDC, for instance between 20 VDC and 60 VDC. This enables compatibility with standard power grids.

In a second aspect, the present invention relates to a method for distributing power in a USB power delivery system, the method comprising:
- providing a low voltage output signal from a power supply;
- transmitting the low voltage output signal to a plurality of USB power delivery devices;
- autonomously regulating, by each of the USB power delivery devices, the output voltage to a value of less than 60VDC;
- coordinating, by the USB power delivery devices, the power delivery among themselves without a central master controller;
- managing, by each of the USB power delivery devices, the connection orientation to address polarization.

In embodiments, coordinating the power delivery may include dynamically allocating power based on the power requirements of connected USB loads and/or a priority system determined by user settings. This optimizes power distribution efficiency.

It is an advantage of embodiments of the present invention that a decentralized control mechanism allows each USB power delivery device to autonomously regulate its output voltage, ensuring safety and compliance with electrical standards without the need for a central master controller. It is a further advantage of embodiments of the present invention that the ability to handle varying power capacities among the USB power delivery devices facilitates the inclusion of devices with different power ratings, which can lead to cost savings and enhanced system flexibility. Additionally, it is an advantage of embodiments of the present invention that the communication among USB power delivery devices for power coordination enhances the overall efficiency of power distribution, adapting dynamically to the connected loads' demands.

Moreover, it is an advantage of embodiments of the present invention that the integration of a user interface allows for user-specific settings to influence power distribution priorities, thereby tailoring the power management to individual needs and preferences. It is also an advantage of embodiments of the present invention that the system's ability to manage connection orientation autonomously addresses issues of cable polarization, simplifying the user experience and reducing potential connectivity errors. Furthermore, it is an advantage of embodiments of the present invention that the architecture supports both wired and wireless communication protocols, offering flexibility in how devices within the system can interact and be managed remotely.

It is another advantage of embodiments of the present invention that the inclusion of a protective device between the power supply and the electrical network ensures additional safety measures against power surges and overloads, protecting both the hardware and the connected devices. Lastly, it is an advantage of embodiments of the present invention that the power supply is capable of converting a wide range of input voltages to a stable low voltage output, making the system versatile and adaptable to various power sources and geographical regions.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

The invention will now be described further, by way of example, with reference to the accompanying drawings, in which:
FIG. 1 is a schematic view of the USB power delivery distribution architecture according to embodiments of the present invention.
FIG. 2 is a block diagram of a USB power delivery device within the USB power delivery distribution architecture showing various components including the input module, microcontroller, communication module, power delivery management module, and output module according to embodiments of the present invention.
FIG. 3 is a picture of a front plate of a flush-mounted USB power delivery device, and FIG. 4 is a picture of a built-in socket therefor.
FIG. 5 is a schematic illustration of a surface-mounted USB power delivery device, and FIG. 6 is an exploded view thereof.
FIG. 7 and FIG. 8 schematically illustrate conversion of an input AC or DC signal to a lower voltage DC signal, and then conversion of this lower voltage DC signal to a low voltage DC signal.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of', is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "architecture" refers to the convergence of electronics hardware, network communications, software applications and wiring into one integrated system. This term "architecture" thus refers to the identification of a system's physical components, according to embodiments of the present invention, the power supply and the at least one USB power delivery device, and their interrelationships.

As used herein, and unless otherwise specified, the term "USB power delivery device" refers to a device that is capable of delivering power to a connected USB load and is compliant with the USB Power Delivery (USB-PD) specification. USB loads may for example be USB-C loads. If a USB-C load is connected to it, the USB power delivery device is as a USB-C power delivery device. Examples of USB-C power delivery devices include, but are not limited to, USB-C wall chargers, USB-C car chargers, USB-C power banks, and USB-C hubs with power delivery capabilities.

As used herein, and unless otherwise specified, the term "flush-mounted" refers to a device that is installed such that its outer surface is substantially aligned with the surrounding surface. Examples of flush-mounted USB power delivery devices include, but are not limited to, USB outlets installed in walls, furniture, or other surfaces such that the outlet face is substantially flush with the surrounding surface. As an alternative to flush-mounted power delivery devices, surface-mounted power delivery devices may be implemented in accordance with embodiments of the present invention.

As used herein, and unless otherwise specified, the term "autonomously regulate" refers to the ability of a device to control its output voltage independently without requiring external control or intervention. Examples of autonomous voltage regulation include, but are not limited to, a USB power delivery device adjusting its output voltage based on the requirements of the connected load or the available input power.

As used herein, and unless otherwise specified, the term "central master controller" refers to a single, centralized device that controls and coordinates the operation of multiple subordinate devices. Examples of systems that use a central master controller include, but are not limited to, traditional power distribution systems where a central control unit manages the power allocation to connected devices.

As used herein, and unless otherwise specified, the term "connection orientation" refers to the physical orientation of a connector when it is mated with another connector. Examples of connection orientations include, but are not limited to, the up or down orientation of a USB-C connector when plugged into a USB-C receptacle.

As used herein, and unless otherwise specified, the term "power capacity" refers to the maximum amount of electrical power that a device is capable of delivering or consuming. Examples of power capacities include, but are not limited to, the wattage rating of a USB power delivery device or the maximum power draw of a connected USB load. An advantage of a USB power delivery distribution architecture, for instance a USB-C power delivery distribution architecture according to embodiments of the invention is that the yield or efficiency of the USB power delivery devices can be up to 240 Watt. Hence, a USB power delivery device in a power delivery distribution architecture according to embodiments can deliver up to 240 Watt to a load, e.g. to a device to be charged, which is much higher than the 70 Watt that current systems can deliver.

As used herein, and unless otherwise specified, the term "priority system" refers to a set of rules or criteria used to determine the order or importance of tasks, resources, or entities. Examples of priority systems include, but are not limited to, a user-defined ranking of connected USB loads that determines the order in which they receive power when the available power is limited.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

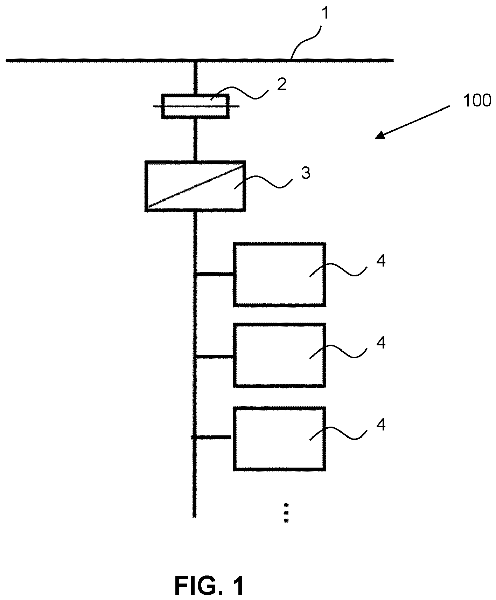

Reference is made to FIG. 1, which illustrates a schematic view of the USB power delivery distribution architecture (100) according to embodiments of the present invention. The architecture (100) comprises a power supply (3) for providing a low voltage output signal between 20 VDC and 60 VDC. In embodiments, the power supply (3) may receive an input from an AC or DC electrical network (1), and may be adapted to convert an input of such electrical network (1) of between 90 VAC and 264 VAC or an equivalent DC voltage of between 90 VDC and 400 VDC to an output of between 20 VDC and 60 VDC, i.e. in the range of or part of the range of SELV regulation, enabling compatibility with standard power grids. The SELV (Safety Extra Low Voltage) regulation describes a voltage that is set so low that in the event of direct touch either during proper operation or in the event of a single fault there is no danger of electric shock due to touch current. In the event of an insulation failure, adequate protection must still be provided.

In embodiments, the USB power delivery distribution architecture (100) may include a protective device (2), e.g. a fuse, integrated between an AC or DC electrical network (1) and the power supply (3) to provide overcurrent protection.

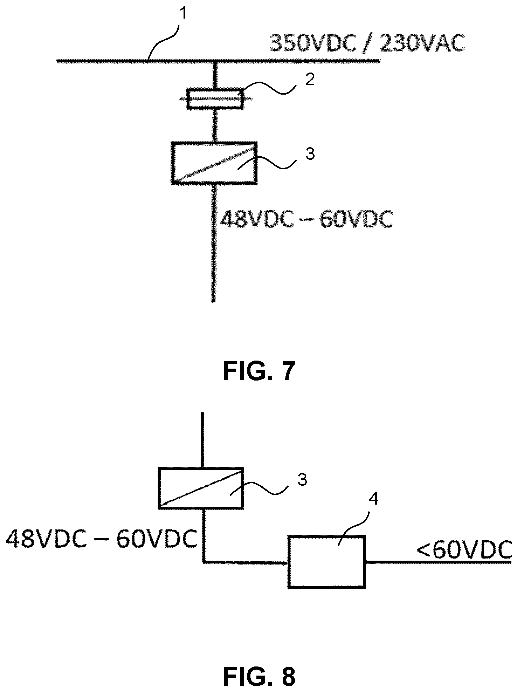

The low voltage output signal of the power supply (3) is transmitted to a plurality of USB power delivery devices (4). The USB power delivery devices (4) have a low voltage input and the possibility to regulate the output voltage to a value of lower than 60 VDC. Thus, the strength of the USB power delivery distribution architecture (100) according to embodiments of the invention lies in the fact that there is a two-step mechanism which provides a low voltage input for the USB power delivery devices (4) and which then provide an USBC power delivery device output of lower than 60VDC. This is illustrated in FIG. 7 and FIG. 8. In FIG. 7, the first step is illustrated. An input of between 90 VAC and 264 VAC or an equivalent DC voltage of between 90 VDC and 400 VDC (in the Figs. simplified indicated as 350 VDC / 230 VAC) is provided from the electrical network (1), through the protective device, e.g. fuse (2), to the power supply (3). This input power signal is brought to an output of between 48 VDC and 60 VDC. The second step is illustrated in FIG. 8. A low voltage input of between 48 VDC and 60 VDC, which is the output from the power supply (3), is provided to the USB power delivery device (4). This USB power delivery device (4) is adapted to bring this low voltage signal to an output, depending on the requirements of the load (12), of lower than 60 VDC. Because of the above explained two-step mechanism, the yield or efficiency of the USB power delivery devices (4) can be up to 240 Watt. Hence, a USB power delivery device (4) in a power delivery distribution architecture (100) according to embodiments of the present invention can deliver up to 240 Watt to a load, e.g. to a device to be powered or charged.

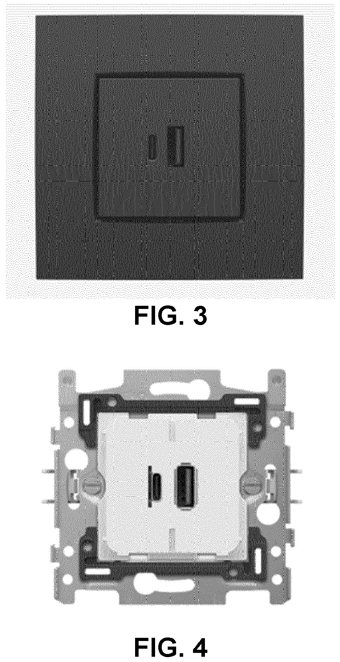

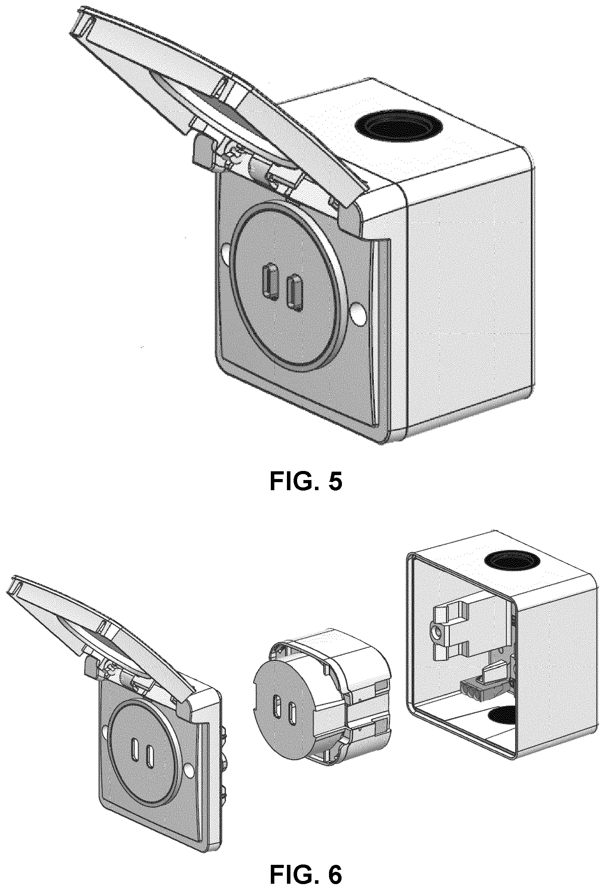

FIG. 1 illustrates a USB power delivery distribution architecture (100) comprising three USB power delivery devices (4), but in practice the USB power delivery distribution architecture (100) may comprise any suitable number of USB power delivery devices (4), as required by a user, or as allowed by applicable regulations. The USB power delivery devices (4) may for instance be, but are not limited to, USB-C power delivery devices. The USB power delivery devices of a single USB power delivery distribution architecture (100) may all be of the same type, or may be of different types (e.g. USB-A, USB-C). The USB power delivery devices may be flush-mounted, or surface-mounted. An example of a flush-mounted combined USB-A and USB-C power delivery device is illustrated in FIG. 3 (front plate), and in FIG. 4 (built-in socket). An example of a surface-mounted double USB-C power delivery device is illustrated in FIG. 5, and in exploded view in FIG. 6.

For new built homes, there is no limit on how many USB power delivery devices (4), for instance USB-C power delivery devices, can be provided in the system. The USB power delivery devices (4) are typically provided in a wall mounted box provided in a wall. These wall mounted boxes can be provided wherever a user wants them to be. As long as electrical wires are provided to connect the USB power delivery devices (4) to each other and to the power supply (3), there is no limit with respect to the number of USB power delivery devices (4) to be provided in the system. However, for existing homes, where standard electrical circuits are provided with electrical sockets, typically only one to eight electrical sockets are provided in one circuit. In this case, an advantage of the system according to embodiments of the present invention is that it can easily replace the electrical sockets that are provided in the existing circuit. A power supply (3) has to be placed in between the existing fuse of the standard electrical circuits and the electrical sockets, and the electrical sockets have to be removed from the wall mounted box and replaced by USB power delivery devices. In that case, the system is limited to the 8 available boxes and thus, the system can only comprise 8 USB power delivery devices (4).

In embodiments, a plurality of the USB power delivery devices (4) can have same or different power ratings. The architecture according to embodiments of the invention can thus in fact provide a flush-mounted (or surface-mounted) charger with different charging points, in case of a USB-C power delivery distribution architecture comprising a plurality of USB-C power delivery devices, of which each or the USB-C power delivery devices can deliver up to 240 Watt to the device to be powered or charged. In particular embodiments, the power delivery distribution architecture (100) may comprise a combination of 240W, 140W, and 100W power delivery devices (4), with lower power ratings resulting in cheaper devices. Each USB power delivery device (4) receives the low voltage output signal of the power supply (3) as an input and autonomously regulates its output voltage to a value of less than 60 VDC to provide an output power signal to a connected USB load (12). The USB power delivery devices (4) are capable of communicating with each other to coordinate power delivery without a central master controller. Each USB power delivery device (4) also autonomously manages connection orientation to address polarization. This allows the USB power delivery devices (4) to handle varying power capacities, facilitating the inclusion of devices with different power ratings in the architecture (100).

In order for a USB power delivery device (4) to be able to autonomously manage connection orientation to address polarization, its input module (11) may be provided with a suitable component, such as a bridge rectifier, e.g. a diode bridge. Such component makes sure that no matter the polarity of the input signal, the output is always of the same polarity, adding to the output. Alternatively, polarization may be addressed by mechanical means, e.g. a connector may have rotational asymmetry.

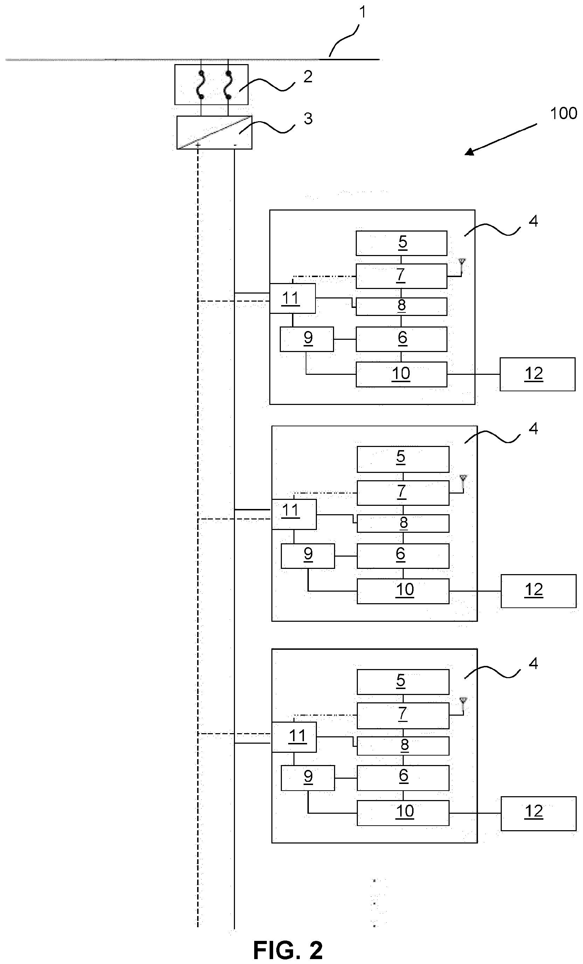

Reference is now made to FIG. 2, which presents a more detailed block diagram of USB power delivery devices (4) within a USB power delivery distribution architecture (100) in accordance with embodiments of the present invention, showing various components according to embodiments of the present invention.

A USB power delivery device (4) according to embodiments of the present invention comprises an input module (11) for receiving the low voltage output signal from the power supply (3), a microcontroller (8) for controlling functions of the USB power delivery device (4), a communication module (7) for facilitating negotiating between the USB power delivery devices (4) forming part of the USB power delivery distribution architecture (100), a user interface (5) for receiving preference settings from a user, a power delivery management module (6) for dynamically allocating power output of the USB power delivery device (4) based at least on power requirements of a connected USB load (12), and an output module (10) for outputting power to the connected USB load (12). This modular design enables efficient power management and communication. In embodiments, the USB power delivery devices (4) can instantly manage power supply that becomes available to optimize power supply to a connected USB load (12), allowing for dynamic reallocation of freed up power.

The microcontroller (8) facilitates the communication between the different devices and their power delivery management module (6) e.g. via RF-communication. The microcontroller (8) gets to know via the communication device (7) that is communicating with other power delivery devices (4) how much power is available, e.g. only 40W is available, and communicates this to the power delivery management module (6). So the microcontroller (8) tells the power delivery management module (6) how much power it has available for the load (12). The power delivery management module (6) does the negotiation/communication with the load (12), for instance it request what the load (12) wants (e.g. does the load want 5V/2A?) and/or what the load (12) can handle (e.g. can the load handle 9V/1A?). When the load (12) and the power delivery management module (6) finish their negotiation, the microcontroller (8) gets to know how much power will be really taken by the load (12) and thus how much is left. This info can then be communicated to the other power delivery devices (4).

In particular embodiments of the present invention, the communication with the outside world via the communication device (7), the negation with the connected load (12) via the power delivery management module (6) and interfacing between the communication device (7) and the power delivery management module (6) via the microcontroller (8) could be implemented in a single component, but for the ease of understanding it is illustrated by means of a plurality of separate components.

Via the user interface (5), the user can provide his or her preferences to the USB power delivery distribution architecture (100) on how to charge or power electric or electronic devices connected to the plurality of USB power delivery devices (4) in the system. The user interface (5) may be provided, for instance, by means of a push button on a socket. Alternatively, or on top thereof, the user interface (5) may comprise a display for visually showing different options. In embodiments of the present invention, the user interface (5) may comprise a selection menu for setting one or more of the following:
- priority order of one or more of the connected USB loads (12),
- target time for indicating when one or more USB loads (12) need to be fully charged,
- allocation of a dedicated USB power delivery device (4) to a particular USB load (12) to make sure that this USB load (12) is powered at all times,
- maximum available power from the power supply (3), and
- maximum allowable power for a particular connected USB load (12).

Thus, the user can, via the user interface (5), so to speak, program the USB power delivery distribution architecture (100) so as to, when the USB power delivery distribution architecture (100) is in use, manage charging and/or powering of the loads (12), e.g. electric or electronic devices, that are connected to the USB power delivery devices (4) in the system.

The above selection options are examples only; the list is not exhaustive, but provides a comprehensive set of user customization options. The user interface (5) allows for customization based on user needs. The dynamic allocation of power by the power delivery management module (6) can be based on a priority system determined by these user settings.

The microcontroller (8) may be configured for receiving and managing the input from the user via the user interface (5) and setting up a communication protocol for controlling the USB power delivery devices (4) accordingly. In the microcontroller (8), the preference settings of the user are analyzed and a communication protocol is set up comprising commands on how the power from the power supply will be divided over the USB power delivery devices (4) for charging and/or powering the loads (12), e.g. electric or electronic devices connected to those USB power delivery devices (4), in order to optimize power delivery/energy use for charging and/or powering all electric or electronic devices and minimize cable losses, thereby taking into account the preferences settings of the user. The communication protocol takes account of a priority order and/or a time frame for powering or charging the loads (12), by dividing power from the power supply (3), according to the input from the user. This provides a mechanism to implement user settings.

The communication module (7) is configured for communicating the communication protocol to each of the plurality of USB power delivery devices (4). This ensures all devices operate based on the established protocol. The communication between the USB power delivery devices (4) may be via a wired or wireless system. No master device is involved in the communication. The USB power delivery devices (4) communicate amongst themselves. In embodiments, the communication module (7) in each USB power delivery device (4) may include means for communicating with an app on a mobile device, enabling remote communication capabilities, for instance for receiving user input. The user interface (5) may then be implemented by the app on the mobile device.

The communication module (7) may communicate in a wireless manner, e.g. by RF, as illustrated by the little antenna in FIG. 2. Alternatively, the communication module (7) may communicate in a wired manner, e.g. over a data over power link as illustrated by the dotted line in FIG. 2 between the communication module (7) and the input module (11). This latter solution provides wired communication, which is in general more robust than wireless communication.

Thus, the power delivery management module (6) in cooperation with the communication module (7) and the microcontroller (8) will make sure that the plurality of USB power delivery devices (4) in the system are controlled in accordance with the preference settings of the user in a most optimized way with respect to use of power delivery and cable losses.

A user can thus provide his or her preference settings to the USB power delivery distribution architecture (100) by means of a user interface (5) on or connected with one of the USB power delivery devices (4), but does not have to manage the control of power delivery to each of the plurality of USB power delivery devices (4) him- or herself. For example, a user can provide a priority ordering in which he or she wants to have loads (12), e.g. electric or electronic devices, charged and/or powered. The microcontroller (8) of one of the USB power delivery devices (4), having received the user input, will, from this input, make a communication protocol with commands in order to control the USB power delivery devices (4) in the architecture (100) accordingly, and the electric or electronic device with highest priority will first be provided with full power. The other devices will get a command to adapt to this situation, and will get less or no power at that moment.

The microcontroller (8) does the analyses and provides the maximum available power to the power delivery management module (6). First a communication takes place between the USB power delivery devices (4) concerning the priority.

If all USB power delivery devices (4) have the same priority, a kind of randomly assigned priority may be taken and the USB power delivery device (4) that received the highest priority starts to take power for its load (12) and communicates to the other USB power delivery devices (4) how much is taken and what is left, for example. Then a second USB power delivery device (4) takes the power it needs, and so on. It is to be noted that every USB power delivery device (4) has a minimum assigned power, so loads (12) may already be charging during the more detailed negotiations.

If, alternatively, some USB power delivery devices (4) have a higher priority than others, the one with the highest priority first takes the power it needs, then the one with the second highest priority takes the power it needs from what remains, and so on. Again, also in this situation, every USB power delivery device (4) has a minimum assigned power.

This way, all provided user preferences will be combined to come to the most optimum communication protocol, which is communicated to all USB power delivery devices (4) via the communication module (7).

The communication module (7) may also comprise means for communication with an app on a mobile device, for example to provide information about the status of the charging and/or powering of the load (12), e.g. electric or electronic device, to a user.

A USB power delivery device (4) may furthermore comprise a voltage regulator (9), such as a DC/DC converter, for instance of the type buck or buck-boost. Such voltage regulator (9) may adjust the voltage level received from the input module (11) to a voltage level required by the output module (10), as required by an associated load (12), in view of priority and or user settings.

### Example

As an example, a USB power delivery architecture (100) is described, coupled to a 230 VAC network, and having four USB power delivery devices (4). A television is connected to a first power delivery device (4), and a first and a second mobile phone are connected to a second and a third USB power delivery device (4), respectively. The fourth USB power delivery device is available for receiving a power cable of a further load (12).

The television is permanently connected to the first power delivery device (4). The user, via the user interface (5) of the first power delivery device (4), gives priority to the USB power delivery device (4), such that it is powered all the time. The communication module (7) of this first power delivery device (4) receives the user input received via user interface (5), and communicates this to the communication modules (7) of the second, third and fourth power delivery devices (4).

The user can, via the user interfaces (5) of the second and third power delivery devices (4), set a target time for indicating when the connected mobile phones need to be fully charged. Again, the communication modules (7) of this second and third power delivery devices (4) communicate these user settings to the communication modules (7) of the other power delivery devices (4) of the USB power delivery distribution architecture (100). The microcontroller (8) of each of the USB power delivery devices (4) to which a load (12) is connected, can then dynamically allocate power output via the power delivery management module (6) to the output module (10) of its USB power delivery device (4), and hence to the connected load (12). If, for instance, the mobile phone connected to the second USB power delivery device (4) needs to be fully charged within 1 hour, and the mobile phone connected to the third USB power delivery device (4) needs to be fully charged within 8 hours, the system, by means of communication between the USB power delivery devices (4), can autonomously, without interference of a master device, control the power output of each of the USB power delivery devices, such that the television receives power continuously, while the first mobile phone receives full power in order to be fully charged by the time set by the user, and while the second mobile phone receives less power, and hence charges more slowly, which is fine, as it needs to be fully charged only later.

Once the first mobile phone is completely charged, the communication module (7) communicates this to the other USB power delivery devices (4) of the architecture (100). The first mobile phone does not require further power anymore, and the freed power budget can be allocated to the third USB power delivery device (4) for charging the second mobile phone.

If at a certain point in time, a further load (12) is connected to the fourth USB power delivery device (4), the communication module (7) of this fourth USB power delivery device (4) communicates this to the other USB power delivery devices (4), and, depending on the power requirements of this further load (12) and the user settings on this fourth USB power delivery device (4), the power budget for the third USB power delivery device (4) may potentially be re-allocated.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

## Claims

1. A USB power delivery distribution architecture (100) comprising:
- a power supply (3) configured for providing a low voltage output signal,
- a plurality of USB power delivery devices (4), each receiving the low voltage output signal of the power supply (3) as an input and providing an output power signal,
wherein
- each of the USB power delivery devices (4) is configured to autonomously regulate its output voltage to a value of less than 60VDC,
- the USB power delivery devices (4) comprise means for communicating which each other to coordinate power delivery without a central master controller, and
- each USB power delivery device (4) is provided with means for autonomously managing connection orientation to address polarization.

2. The USB power delivery distribution architecture (100) according to claim 1, wherein the USB power delivery devices (4) are configured to handle varying power capacities, facilitating the inclusion of devices with different power ratings.

3. The USB power delivery distribution architecture (100) according to any of the previous claims, wherein a USB power delivery device (4) comprises
- an input module (11) for receiving the low voltage output signal from the power supply (3),
- a microcontroller (8) for controlling functions of the USB power delivery device (4),
- a communication module (7) for facilitating negotiating between the USB power delivery devices (4) part of the USB power delivery distribution architecture (100),
- a power delivery management module (6) for dynamically allocating power output to the USB power delivery device (4) based at least on power requirements of a connected USB load (12); and
- an output module (10) for outputting power to the connected USB load (12).

4. The USB power delivery distribution architecture (100) according to claim 3, wherein a USB power delivery device (4) further comprises a user interface (5) for receiving preference settings from a user.

5. The USB power delivery distribution architecture (100) according to claim 4, wherein the dynamic allocation of power is based on a priority system determined by user settings.

6. The USB power delivery distribution architecture (100) according to claim 4 or 5, wherein the power delivery management module (6) is configured for, when the USB power delivery distribution architecture (100) is in use, setting up a communication protocol for controlling the plurality of USB power delivery devices (4) in accordance with the preference settings of the user by dividing power from the power supply (3) over the plurality of USB power delivery devices (4).

7. The USB power delivery distribution architecture (100) according to claim 6, wherein the communication module (7) is configured for for communicating the communication protocol to the plurality of USB power delivery devices (4).

8. The USB power delivery distribution architecture (100) according to any of claims 4 to 7, wherein the power delivery management module (6) comprises means for receiving and managing the input from the user interface (5) and control the USB power delivery devices (4) accordingly.

9. The USB power delivery distribution architecture (100) according to any of claims 4 to 8, wherein the user interface (5) comprises a selection menu for setting one or more of the following:
- priority order of one or more of the connected USB loads (12),
- target time for indicating when one or more USB loads (12) need to be fully charged,
- allocation of a dedicated USB power delivery device (4) to a particular USB load (12) to make sure that this USB load (12) is powered at all times,
- maximum available power from the power supply (3), and
- maximum allowable power for a particular connected USB load (12).

10. The USB power delivery distribution architecture (100) according to any of claims 3 to 9, wherein the microcontroller (8) and/or the power delivery management module (6) comprises means for instantly managing power supply that becomes available to optimize power supply to a connected USB load (12).

11. The USB power delivery distribution architecture (100) according to any of claims 3 to 10, wherein the communication module (7) comprises:
- means for communicating with the other USB power delivery devices (4) in the architecture, and/or
- means for communication with an app on a mobile device.

12. The USB power delivery distribution architecture (100) according to any of claims 3 to 11, wherein the communication module (7) uses a wired or wireless communication protocol.

13. The USB power delivery distribution architecture (100) according to any of the previous claims, wherein the power supply (3) is adapted for bringing an input of between 90 VAC and 264VAC or an equivalent DC voltage of between 90VDC and 400VDC to an output of between 20 VDC and 60 VDC.

14. A method for distributing power in a USB power delivery system, the method comprising:
- providing a low voltage output signal from a power supply;
- transmitting the low voltage output signal to a plurality of USB power delivery devices;
- autonomously regulating, by each of the USB power delivery devices, the output voltage to a value of less than 60VDC;
- coordinating, by the USB power delivery devices, the power delivery among themselves without a central master controller;
- managing, by each of the USB power delivery devices, the connection orientation to address polarization.

15. The method of claim 14, wherein coordinating the power delivery includes dynamically allocating power based on the power requirements of connected USB loads and/or a priority system determined by user settings.
